# EUROPEAN PATENT APPLICATION

(11) **EP 1 867 550 A2**
(43) Date of publication of application: **19.12.2007**
(21) Application number: 07109591.3
(22) Date of filing: 05.06.2007
(51) Int. Cl.: B62B 9/12

(54) **Pram bassinet**

(30) Priority: 14.06.2006 SE 0601301
(71) Applicant: European Nursery Group Sweden AB, 283 83 Osby (SE)
(72) Inventor: Johansson, Lars-Eric, 283 45 Osby (SE); Svensson, Roger, 283 91 Osby (SE)
(74) Representative: Hjalmarsson, Magnus Axel

(57) **Abstract**

A bassinet (1) for prams, said bassinet having a bottom plate (3), an upper frame (5) and a canvas (7), which forms the walls of the bassinet in use. The bottom plate and the frame are connected to each other by means of at least one link (9), which can move the frame away from the bottom plate and thus stretch the canvas. The link comprises an upper link element (21) and a lower link element (17). The upper link element is articulated to the frame via an upper pivot axis (23) and the lower link element is articulated to the bottom plate via a lower pivot axis (19). The upper and lower link elements are articulated to each other via an intermediate pivot axis (25), which in an extended position is located outside a straight line between the upper and lower pivot axes and is prevented from moving further outwards. The link can thus receive great downward forces from the frame and, at the same time, easily be collapsed, without necessitating removal of a padded cover from the bassinet.

## Description

### Field of the Invention

The invention relates to a bassinet for prams, said bassinet comprising a bottom plate, a circumferential upper frame, a canvas which forms the walls of the bassinet and which connects the bottom plate to the frame, and stretching means which are arranged to move the frame away from the bottom plate to a stretched position and thus stretch said canvas.

### Background Art

A bassinet of the above-mentioned type is usually included as part of a pram and is adapted to be fastened to a wheeled pram chassis so as to form a complete pram.

If the pram is to be transported, for instance in the boot of a car, both the chassis and the bassinet can be folded so as to occupy less space.

According to prior art technique, the stretching means of the bassinet may comprise two yokes articulated to the frame. For use of the bassinet, the yokes are pivoted away from the frame and towards the bottom plate until the canvas is stretched, and the yokes are in this position snapped into slots which are arranged in the bottom plate. For subsequent folding of the bassinet, the yokes are released from the slots of the bottom plate, after which the bassinet can be folded by the frame being moved towards the bottom plate, thus reducing the height of the bassinet. For childproof safety, the yokes should in the stretched position be firmly stretched so that the bassinet can receive a relatively great load (>35 kg) when the frame is subjected to a downward load. This means that considerable hand power is required to stretch and release the yokes.

To make the inside of the bassinet comfortable for the baby, a padded cover is slipped onto the frame and thus lines the inner walls and bottom of the bassinet. Furthermore a mattress is placed on the bottom plate. A drawback of the above prior art technique is that the cover must be slipped off and the mattress removed, both when folding and unfolding the bassinet, to allow the user to reach the yokes. As a result, folding and unfolding of the bassinet will be difficult and time-consuming.

### Summary of the Invention

An object of the present invention is to provide a bassinet which is easier to fold.

This object is achieved with a bassinet according to claim 1. More specifically, the invention concerns a bassinet for prams, said bassinet comprising a bottom plate, a circumferential upper frame, a canvas which forms the walls of the bassinet and which connects the bottom plate to the frame, and stretching means which are arranged to move the frame away from the bottom plate to a stretched position and thus stretch said canvas. At least one of said stretching means comprises a link, which consists of a lower link element, which is articulated to the bottom plate via a lower pivot axis, and an upper link element, which is articulated to the frame via an upper pivot axis extending parallel to the lower pivot axis. The lower and upper link elements are articulated to each other via an intermediate pivot axis extending parallel to the upper and lower pivot axes. The intermediate pivot axis is in the stretched position located outside an imaginary straight line between the lower pivot axis and the upper pivot axis as seen from the inside of the bassinet, and the link comprises stop means which in the stretched position prevent the intermediate pivot axis from moving further outwards away from the bottom plate.

Such a bassinet can, adjacent the stretching means, in the unfolded position, receive a great load since a load exerted on the frame toward the bottom plate acts to force the intermediate pivot axis outwards, and the stop means prevent such a movement. At the same time the stretching means can be operated manually through a padded cover, which therefore need not be removed for folding/unfolding. Nor does a mattress, if any, have to be removed. Easier handling of the bassinet is thus achieved. Moreover, less hand power is required for folding and unfolding of the bassinet.

The bottom plate is preferably elongate and the stretching means may then comprise two pairs of links of the above type, one pair on each long side of the bottom plate. This provides a stable construction. The upper or lower link elements in each pair of links can be interconnected by a longitudinal bar, so that the links of each pair are caused to make parallel movements. As a result, the bassinet can be made even more stable and a user can, by only operating one link in each pair, fold or unfold the bassinet.

The upper link element of each link may comprise a locking means, for instance in the form of a spring-loaded cotter pin, which in the stretched position is arranged to prevent the rotation of the upper link element about the upper pivot axis until a user releases the locking means. Such a locking means makes it possible to prevent inadvertent folding of the bassinet. If the links are arranged in two pairs, one link of each pair may have such a locking means.

If the bassinet has locking means and comprises a padded cover, the cover can have a visual mark in the position of the locking means. This allows a user to easily find the locking means and, if desired, easily release the same.

The lower link element can further have an abutment surface, which in the stretched position abuts against the bottom plate, in a position outside the lower pivot axis as seen from the inside of the bassinet. This makes the frame more stable relative to the bottom plate.

### Brief Description of the Drawings

Fig. 1 is a perspective view of a bassinet.
Fig. 2 is a side view of a stretching means in the extended position.
Fig. 3 illustrates the stretching means in Fig. 2 in the collapsed position.
Fig. 4 shows part of a padded cover.

### Description of an Embodiment

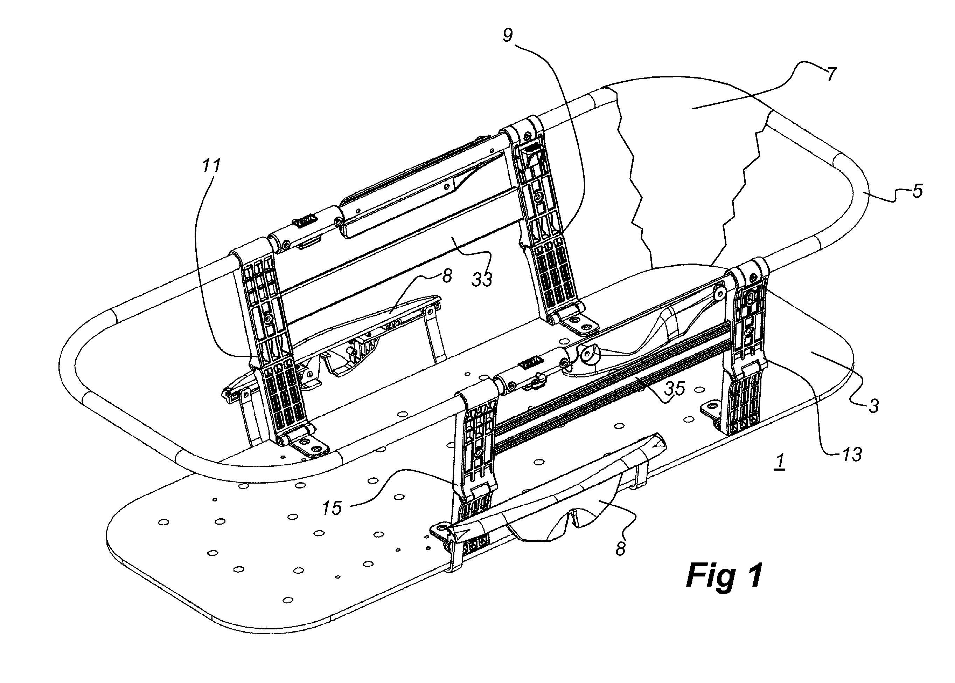

Fig. 1 is a perspective view of a bassinet 1. The bassinet has a bottom plate 3 which can be made of plywood. Further the bassinet has a circumferential upper frame 5, which, for instance, may consist of one or more steel tubes. The bottom plate 3 and the frame 5 are connected to each other with a canvas 7, for instance of cotton, which, with the bassinet unfolded, forms the walls of the same. Only a minor part of the canvas 7 is shown in Fig. 1 in order not to conceal the folding mechanism of the bassinet. The canvas 7 can be stitched to the bottom plate 3 and can be fastened to the frame 5 by being folded over the same and then sewn, so that the frame extends through a channel in the upper part of the canvas. As already mentioned, the bassinet is, when used, provided with a padded cover (not shown), which makes the bassinet soft. Fastening means 8 are to be found on the bassinet and are used to fasten, in a manner known per se, the bassinet to a pram chassis (not shown).

The bassinet further comprises stretching means in the form of four links 9, 11, 13, 15, which are arranged to move the frame 5 away from the bottom plate 3 to a stretched position in which the canvas 7 is stretched and the bassinet 1 is unfolded.

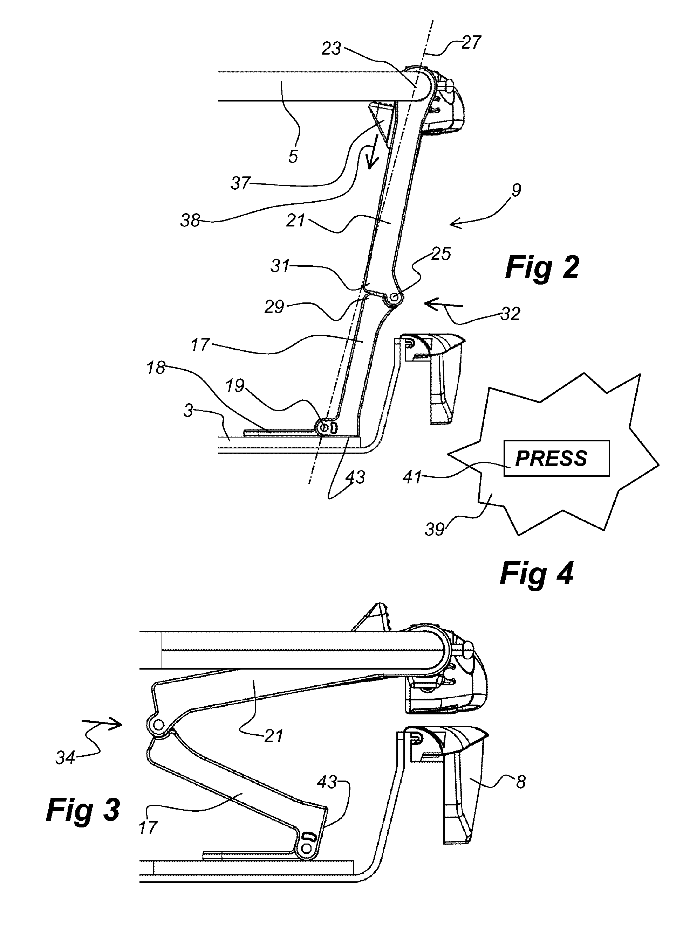

Fig. 2 is a side view of one of the links 9 in the extended position. The link comprises a lower link element 17, which is articulated to the bottom plate 3 via a lower pivot axis 19, for instance by means of a hinge in an attachment plate 18, which is attached to the bottom plate 3. Furthermore the link 9 comprises an upper link element 21, which is articulated to the frame 5 via an upper pivot axis 23, which, if the frame is circular in cross-section, may coincide with the centre of the cross-section of the frame 5. The upper link element may then have a hole through which the frame 5 extends. The link elements can be made of injection-moulded plastic. The upper pivot axis 23 is substantially parallel to the lower pivot axis 19. The lower link element 17 is articulated to the upper link element 21 via an intermediate pivot axis 25, for example by means of a hinge. The intermediate pivot axis 25 is substantially parallel to the upper pivot axis 23 and the lower pivot axis 19. In the shown stretched position, the intermediate pivot axis 25 is positioned (for instance about 20 mm) outside an imaginary straight line 27 between the lower pivot axis 19 and the upper pivot axis 23, seen from the inside of the bassinet. The link further comprises stop means, in the case shown shoulders 29, 31 on each of the upper link element 21 and the lower link element 17, which in the stretched position prevent the intermediate pivot axis from moving further outwards away from the bottom plate. Thus, the link can no longer be articulated/flexed in this direction. With this arrangement, the frame can in the stretched position be subjected to great forces without the bassinet being folded. It goes without saying that stop means can be arranged in many other ways.

The lower link element 17 has an abutment surface 43, which in the stretched position abuts against the bottom plate 3, outside the lower pivot axis 19 seen from the inside of the bassinet, thus stabilising the frame 5. If the links are arranged as illustrated in Fig. 1, the frame 5 is in this manner stabilised in the lateral direction. This function can also be achieved in other manners.

Fig. 3 illustrates the stretching means in Fig. 2 in the collapsed position. To allow the stretching means to move from the position shown in Fig. 2 to the position shown in Fig. 3, the user must press the link 9 in the direction indicated by the arrow 32 in Fig. 2. The intermediate pivot axis 25 then starts to move inwards, and the distance between the lower pivot axis 19 and the upper pivot axis 23 increases. Since the canvas 7 is already stretched, the canvas counteracts this movement until the link reaches its dead centre where the distance between the upper pivot axis 23 and the lower pivot axis 19 is at its maximum and the intermediate pivot axis is positioned on the line 27 between the upper and lower pivot axis axes 23, 19. Subsequently, the link collapses and the bassinet can easily be folded. Thus the canvas 7 prevents the bassinet from being folded by mistake. However, it is in many cases appropriate to supplement this function with additional locking means, as will be described below. When unfolding the bassinet, the link is acted upon in the opposite direction, indicated by the arrow 34 in Fig. 3, until the dead centre is again passed and the stretched position occurs.

Referring once more to Fig. 1, the shown bassinet comprises, as mentioned above, four links 9, 11, 13, 15, substantially of the type as shown in Figs 2 and 3. The links are arranged with one pair of links 9, 11 and 13,15, respectively, on each long side of the elongate bassinet. As illustrated, the links in each pair can be connected to a longitudinal bar 33 and 35 respectively, which as shown are fastened to the upper link elements of the respective links. This makes it possible to unfold and fold the bassinet by operating only one link on each long side. This link then acts on the other link in the same pair via the bar 33 or 35, so that this other link makes a substantially identical, parallel movement. This further facilitates the handling of the bassinet. The bars 33 and 35 also make the bassinet very stable.

As is evident from Fig. 2, the shown link element comprises a locking means in the form of a cotter pin mechanism 37, which is spring loaded and comprises a cotter pin which extends in the upper link element 21. In the stretched position, the cotter pin is inserted in a hole in the frame 5 and thus prevents the rotation of the upper link element about the upper pivot axis 23. In this position, the link 9 therefore cannot be collapsed until a user releases the locking means by moving the cotter pin mechanism 37 in the direction of the arrow 38. When unfolding the bassinet, the cotter pin is again inserted into the hole of the frame 5 by means of a spring.

In the bassinet in Fig. 1, one of the links 9, 13 in each pair comprises such a locking mechanism. This results in highly reliable locking, and the bassinet can be folded in one simple operation without removing the padded cover of the bassinet.

Fig. 4 shows a piece of such a padded cover 39. In the position where a locking means is located, the cover may be provided with a visual mark 41, in the case shown the text "PRESS", so that the user will easily find the locking means.

The invention is not limited to the embodiment shown and may be varied within the scope of the appended claims. For example, the upper frame may be rectangular in cross-section, and the upper link element may be connected to the frame by means of a hinge. Even if the shown bassinet is mainly intended for a reclining baby, it may comprise a backrest that can be raised to make it possible for the baby to sit comfortably in the pram. It is further possible to arrange links also at the short sides of the bassinet.

## Claims

1. A bassinet for prams, said bassinet comprising a bottom plate (3), a circumferential upper frame (5), a canvas (7) which forms the walls of the bassinet and which connects the bottom plate to the frame, and stretching means (9, 11, 13, 15) which are arranged to move the frame (5) away from the bottom plate (3) to a stretched position and thus stretch said canvas, **characterised in that** at least one of said stretching means comprises a link, which consists of a lower link element (17), which is articulated to the bottom plate (3) via a lower pivot axis (19), and an upper link element (21), which is articulated to the frame (5) via an upper pivot axis (23) extending parallel to the lower pivot axis, that said lower and upper link elements are articulated to each other via an intermediate pivot axis (25) extending parallel to the upper and lower pivot axes, that said intermediate pivot axis in the stretched position is located outside an imaginary straight line (27) between the lower pivot axis and the upper pivot axis (19, 23) as seen from the inside of the bassinet, and that the link comprises stop means (29, 31) which in the stretched position prevent the intermediate pivot axis from moving further outwards away from the bottom plate.

2. A bassinet as claimed in claim 1, wherein the bottom plate is elongate and the stretching means comprise two pairs (9, 11 and 13, 15 respectively) of such links, one pair on each long side of the bottom plate.

3. A bassinet as claimed in claim 2, in which the upper or lower link elements in each pair of links are interconnected by means of a longitudinal bar (33, 35) so that the links of each pair are caused to make parallel movements.

4. A bassinet as claimed in claim 1, in which the upper link element comprises a locking means (37), which in the stretched position is arranged to prevent the rotation of the upper link element about the upper pivot axis (23) until a user releases the locking means.

5. A bassinet as claimed in claim 3, in which, in a link in each pair, the upper link element comprises a locking means (37), which in the stretched position is arranged to prevent the rotation of the upper link element about the upper pivot axis (23) until a user releases the locking means.

6. A bassinet as claimed in claim 4 or 5, in which the bassinet comprises a padded cover (39), which has a visual mark (41) in the position of a locking means.

7. A bassinet as claimed in any one of the preceding claims, in which the lower link element (17) has an abutment surface (43), which in the stretched position abuts against the bottom plate (3), outside the lower pivot axis (19) as seen from the inside of the bassinet.
